# FASCICULE DE BREVET EUROPEEN

(11) **EP 3 553 691 B1**
(45) Date de publication et mention de la délivrance du brevet: **10.03.2021**
(21) Numéro de dépôt: 19167886.1
(22) Date de dépôt: 08.04.2019
(51) Int. Cl.: G06F 21/83, G06F 21/86

(54) **DISPOSITIF DE SÉCURITE D'UN TERMINAL DE PAIEMENT COMPRENANT UN ÉLÉMENT DE SÉCURITÉ ENCASTRÉ**
SICHERHEITSVORRICHTUNG FÜR EIN ZAHLUNGSENDGERÄT, DIE EIN EINGEBAUTES SICHERHEITSELEMENT UMFASST
SECURITY DEVICE FOR A PAYMENT TERMINAL COMPRISING AN EMBEDDED SECURITY ELEMENT

(30) Priorité: 09.04.2018 FR 1853073
(43) Date de publication de la demande: 16.10.2019
(73) Titulaire: INGENICO GROUP, 75015 Paris (FR)
(72) Inventeur: HERNANDEZ, Vincent, 38780 Oytier St Oblas (FR)
(74) Mandataire: Vidon Brevets & Stratégie

(56) Documents cités:
- EP-A1- 2 146 562
- FR-A1- 2 929 042

## Description

### 1. Domaine de l'invention

Le domaine de l'invention est celui des dispositifs électroniques et plus particulièrement des dispositifs de saisies de données tels que des terminaux de paiement électronique.

L'invention se rapporte plus précisément à la sécurisation de tels dispositifs de saisie de données, face à des tentatives d'intrusion en vue de l'obtention frauduleuse de données confidentielles (chiffres de code confidentiel, données de carte, etc.).

### 2. Art Antérieur

Les terminaux de paiement électronique traitant des données sensibles, en particulier les données bancaires, il est nécessaire de les protéger contre les tentatives de fraudes, comme par exemple les tentatives d'introduction d'un dispositif espion au niveau du clavier de tels terminaux de paiement électronique.

Pour cela, des mesures de protection existent, matérielles et/ou logicielles.

Parmi les mesures de protection matérielles, on trouve notamment les techniques destinées à détecter l'ouverture de la coque/du capot du terminal de paiement électronique, par exemple via la mise en œuvre de « fausses touches » en élastomère associées à des « pads carbone » ou des « dômes métal ».

En effet, un terminal de paiement électronique comprend, de manière classique, une demi-coque supérieure et une demi-coque inférieure. La demi-coque supérieure comprend des ouvertures qui sont utilisées par exemple pour laisser dépasser les touches du clavier et l'écran d'affichage du terminal.

Au niveau du clavier, les dispositifs « fausses touches » sont utilisés pour détecter une tentative de séparation de la demi-coque supérieure et de la demi-coque inférieure. Les « fausses touches », placées sur la carte de circuit imprimé, subissent une pression permanente lorsque le terminal de paiement électronique est assemblé, par exemple par l'intermédiaire d'une pièce de compression s'étendant depuis l'intérieur de la demi-coque supérieure. Cette pression sur les « fausses touches » établit un contact électrique entre le « pad carbone » ou le « dôme métal » et la carte de circuit imprimé, engendrant la fermeture d'un circuit de sécurité en surface de la carte.

Si le terminal de paiement électronique est démonté, la pression exercée sur les « fausses touches » diminue et le contact électrique est rompu, entrainant ainsi la détection d'une tentative de fraude.

Cette solution de l'art antérieur est généralement assez efficace. Néanmoins, il existe des possibilités de contourner la protection conférée par les « fausses touches », par exemple par injection d'un liquide conducteur entre la carte de circuit imprimé et les « fausses touches », assurant de manière permanente le contact électrique, neutralisant ainsi toute détection d'ouverture du terminal de paiement électronique.

De plus, l'efficacité de ces « fausses touches » diminue au cours du temps, du fait de leur dégradation, due aux efforts appliqués ainsi qu'à une détérioration du carbone par exemple.

Par ailleurs, il est nécessaire de multiplier les dispositifs « fausses touches », par exemple sur chacune des faces du circuit imprimé, si l'on souhaite pouvoir détecter une tentative d'intrusion initiée de n'importe quel côté du terminal de paiement électronique (EP2146562 A1) décrit un système de protection d'un circuit imprimé d'un terminal de paiement et constitue un document d'art antérieur pertinent.

Il existe donc un besoin pour une technique de sécurisation des dispositifs électroniques utilisés pour la saisie ou la lecture de données sensibles, qui soit fiable et durable dans le temps, simple à mettre en œuvre, et qui permette de contrer les techniques frauduleuses de contournement des dispositifs de sécurité actuels.

### 3. Résumé

La présente technique permet de résoudre en partie les problèmes posés par l'art antérieur. La présente technique se rapporte en effet à un dispositif de sécurité d'un terminal de paiement électronique comprenant au moins un circuit imprimé.

Selon la technique proposée, le dispositif de sécurité comprend au moins un élément déformable de sécurité destiné à être inséré dans un logement du circuit imprimé, le circuit imprimé comprenant au moins un circuit de sécurité comprenant au moins une piste conductrice interne au circuit imprimé et interrompue au niveau du logement, et l'élément déformable présente par ailleurs au moins une surface conductrice destinée à fermer la piste conductrice interne lorsque l'élément déformable est déformé dans le logement.

L'invention propose ainsi une technique nouvelle et inventive pour la sécurisation d'un terminal de paiement électronique grâce à un élément de sécurité déformable inséré dans un logement du circuit imprimé du terminal de paiement électronique.

En effet, l'élément de sécurité, lorsqu'il est déformé, permet la fermeture d'un circuit de sécurité interne au circuit imprimé, et lorsqu'il reprend sa forme initiale (par exemple suite à une tentative d'intrusion qui modifie les pressions subies par l'élément déformable), le circuit de sécurité s'ouvre, permettant une détection de la tentative d'intrusion dans le terminal de paiement électronique.

Pour ce faire, le circuit de sécurité comporte au moins une piste de sécurité formée à l'intérieur du circuit imprimé et ne débouchant pas à sa surface, rendant plus difficile toute tentative d'accès à cette piste de sécurité, par exemple par injection d'un liquide conducteur en surface du circuit imprimé. La fermeture du circuit de sécurité est donc mise en œuvre à l'intérieur du circuit imprimé et non plus en surface de celui-ci comme c'est le cas dans l'art antérieur.

Pour ce faire, un logement est donc prévu dans le circuit imprimé, au niveau duquel le circuit de sécurité interne est interrompu et la piste de sécurité divisée en plusieurs portions de piste. Contrairement à l'art antérieur, le circuit de sécurité ne se trouve donc pas affleurant à la surface du circuit imprimé.

La mise en contact de ces portions de piste est ensuite effectuée par le biais de la déformation d'un élément déformable de sécurité présentant au moins une surface conductrice qui vient au contact des portions de piste lorsque l'élément déformable de sécurité est inséré dans le logement et déformé.

Lorsqu'une tentative d'intrusion, engendrant le retour de l'élément déformable à sa forme initiale, a lieu, la fermeture du circuit de sécurité n'est plus assurée et la tentative d'intrusion est détectée.

Selon un aspect particulier, l'élément déformable de sécurité est conçu pour se déformer dans le logement par un moyen appartenant au groupe comprenant :
- déformation par montage d'un composant sur le circuit imprimé au-dessus de l'élément déformable de sécurité inséré dans le logement ;
- déformation par insertion d'un moyen de fixation à l'intérieur de l'élément déformable de sécurité inséré dans le logement ;
- compression par assemblage du terminal de paiement électronique.

Lorsque l'élément déformable est comprimé sous un composant ou sous les demi-coques assemblées du terminal de paiement électronique, ou encore lorsqu'un élément de fixation (par exemple une vis) est inséré dans son milieu, il tend à s'élargir et à occuper toute la place à l'intérieur du logement, ce qui provoque la mise en contact de sa surface conductrice avec les portions de piste, et ainsi la fermeture du circuit de sécurité.

Lorsqu'une tentative d'intrusion a lieu, et que le terminal ou le composant est démonté, la pression exercée sur l'élément déformable diminue et il tend à reprendre sa forme initiale, ce qui provoque l'ouverture du circuit de sécurité.

De même, lorsqu'une tentative d'intrusion a lieu par démontage du moyen de fixation inséré dans le dispositif de sécurité, l'élément déformable tend à reprendre sa forme initiale, provoquant l'ouverture du circuit de sécurité.

Selon un aspect particulier, au moins une partie de l'élément déformable est réalisée en élastomère.

L'élastomère permet à l'élément déformable de se déformer aisément, sans nécessiter l'application d'une forte pression. Cela permet ainsi une déformation par simple montage d'un composant au-dessus du logement dans lequel est inséré l'élément déformable.

Selon un autre aspect particulier, le logement et l'élément déformable de sécurité présentent une forme sensiblement cylindrique.

Cela permet une déformation uniforme de l'élément déformable de sécurité, rendant ainsi optimale la fermeture du circuit de sécurité. De cette manière, la surface conductrice de l'élément déformable de sécurité peut être située sur l'extérieur du cylindre, de manière à entrer en contact avec la ou les pistes conductrices du circuit de sécurité lorsque le cylindre s'élargit sous la pression qui lui est appliquée.

Selon un aspect particulier, le logement est un trou débouchant.

La mise en œuvre d'un logement traversant dans le circuit imprimé, avec un dispositif de sécurité affleurant de part et d'autre du circuit imprimé lorsqu'il est inséré dans le logement permet de limiter le nombre de dispositifs de sécurité. En effet, un seul dispositif de sécurité permet de détecter une intrusion par ouverture de l'un ou l'autre des capots du terminal de paiement électronique, c'est-à-dire lorsque la pression qui lui est appliquée sur l'une ou l'autre des faces du circuit imprimé est relâchée.

Selon un aspect particulier, le dispositif de sécurité comprend deux éléments déformables présentant chacun au moins une surface conductrice, destinés à être insérés l'un sur l'autre dans le logement.

L'utilisation de deux éléments déformables est utile pour assurer la continuité électrique d'au moins deux circuits de sécurité distincts disposés sur des couches différentes du circuit imprimé, un élément déformable venant au moins fermer un circuit formé dans une couche.

Selon un aspect particulier, les deux éléments déformables sont en contact par une surface non conductrice.

Ainsi, les deux éléments déformables peuvent fermer indépendamment les au moins deux circuits de sécurité formés dans les couches respectives du circuit imprimé, du fait que la surface de contact entre eux est isolante. Au moins deux circuits de sécurité indépendants disposés sur des niveaux différents du circuit imprimé sont ainsi formés.

Selon un aspect particulier, le circuit imprimé comprend deux circuits de sécurité coplanaires comprenant chacun au moins une piste de sécurité conductrice interne au circuit imprimé et interrompue au niveau du logement et l'élément déformable présente au moins une surface conductrice destinée à fermer la piste conductrice de chacun des deux circuits de sécurité coplanaires lorsque l'élément déformable est déformé.

Ainsi, selon ce mode de réalisation, lorsque deux circuits de sécurité sont prévus dans le circuit imprimé, interrompus au niveau du logement, le (ou les) élément(s) déformable(s) permet(tent) la fermeture de ces deux circuits. Dans le cas où deux éléments déformables sont utilisés, il est possible de détecter quel circuit est ouvert et ainsi de détecter plus précisément quel côté du terminal de paiement est attaqué.

Selon un aspect particulier, l'élément déformable de sécurité présente une collerette à une de ses extrémités, la collerette étant destinée à recouvrir le logement en surface du circuit imprimé lorsque l'élément déformable de sécurité est inséré dans le logement.

Ainsi, selon ce mode de réalisation, la collerette permet d'optimiser l'étanchéité du dispositif de sécurité en surface du circuit imprimé et de rendre ainsi plus difficile, voire impossible, une neutralisation du dispositif de sécurité (par injection d'un liquide conducteur par exemple) ou son retrait frauduleux du logement dans lequel il est inséré.

Selon un aspect particulier, les deux éléments déformables sont en contact par une surface d'échange conductrice lorsque les deux éléments déformables sont déformés dans le logement.

Ainsi, les deux éléments déformables se comportent comme un seul élément déformable, en fermant conjointement les au moins deux circuits de sécurité formés dans les différentes couches du circuit imprimé. Les collerettes respectives des deux éléments déformables permettent de maintenir les surfaces frontales conductrices des deux éléments disjointes tant que le dispositif de sécurité n'est pas comprimé. Selon une variante de réalisation, l'un des deux éléments déformables pourrait être actif avec une zone conductrice, et l'autre passif non conducteur, la partie conductrice du dispositif actif devant être positionnée en face du circuit de sécurité à fermer lorsque les deux éléments déformables sont comprimés.

Selon un aspect particulier, le dispositif de sécurité est recouvert d'un treillis souple.

Ainsi, l'accès au dispositif de sécurité est rendu plus complexe, et la sécurisation du terminal de paiement électronique est encore renforcée. De plus, un tel treillis souple peut être mis en œuvre avant la déformation du dispositif de sécurité et conserver toute son efficacité après déformation du dispositif de sécurité, car il supporte lui-même d'être déformé.

Enfin, la technique proposée concerne également un terminal de paiement électronique comprenant au moins un dispositif de sécurité tel que décrit précédemment, selon ses différents modes de réalisation.

### 4. Figures

D'autres caractéristiques et avantages apparaîtront plus clairement à la lecture de la description suivante de modes de réalisation particuliers de la divulgation, donnés à titre de simples exemples illustratifs et non limitatifs, et des dessins annexés, parmi lesquels :

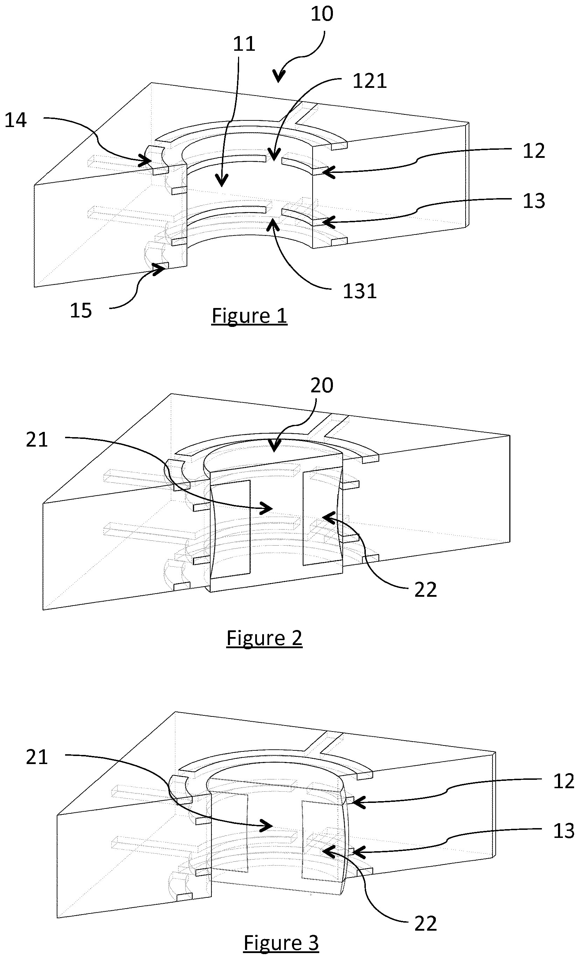

- la **figure 1** est une vue en trois dimensions et en coupe d'une portion de circuit imprimé comportant deux circuits de sécurité internes, formés chacun d'une piste de sécurité interrompue au niveau d'un logement traversant le circuit imprimé;
- les **figures 2 et 3** sont des vues en trois dimensions et en coupe de la portion de circuit imprimé illustrée en figure 1, comportant un dispositif de sécurité inséré dans le logement, présentant au moins un élément déformable, respectivement « au repos » (figure 2) et « comprimé » (figure 3), selon un premier mode de réalisation de l'invention ;

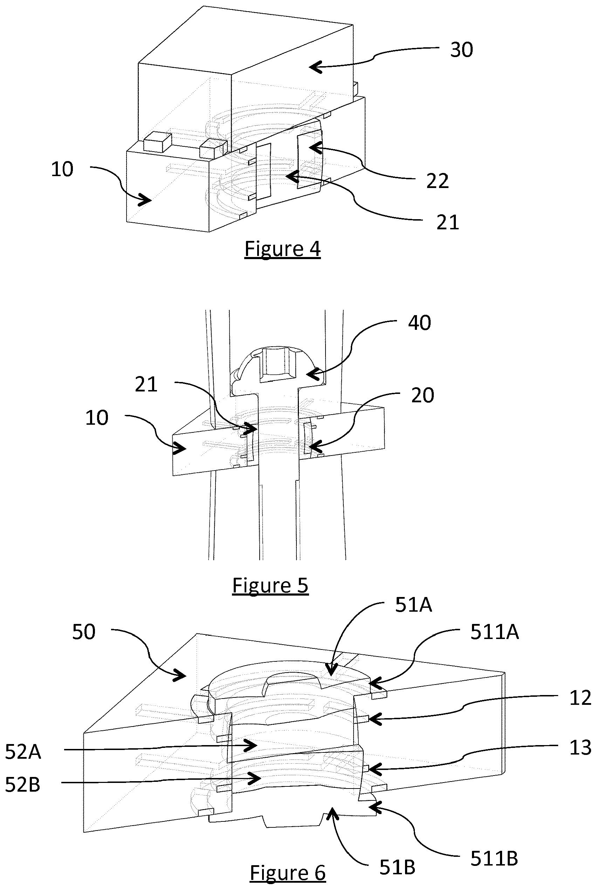

- la **figure 4** est une vue en trois dimensions et en coupe de la portion de circuit imprimé illustrée en figure 1, comportant un dispositif de sécurité inséré dans le logement, présentant au moins un élément déformable, selon une variante du premier mode de réalisation, dans lequel l'élément déformable est comprimé sous la pression d'un composant ;
- la **figure 5** est une vue en trois dimensions et en coupe de la portion de circuit imprimé illustrée en figure 1, comportant un dispositif de sécurité inséré dans le logement, présentant au moins un élément déformable, selon un deuxième mode de réalisation, dans lequel le dispositif de sécurité est traversé par un moyen de fixation.
- la **figure 6** est une vue en trois dimensions et en coupe de la portion de circuit imprimé illustrée en figure 1, comportant un dispositif de sécurité inséré dans le logement, présentant deux éléments déformables positionnés l'un au-dessus de l'autre, selon un troisième mode de réalisation de l'invention, dans lequel les éléments déformables sont « comprimés ».

### 5. Description

Le principe général de la technique proposée consiste à sécuriser un dispositif de saisie de données, par exemple un terminal de paiement électronique, grâce à au moins un élément déformable de sécurité à surface conductrice, encastré/inséré dans un logement du circuit imprimé du dispositif de saisie de données, permettant de fermer un ou plusieurs circuit(s) de sécurité formé(s) à l'intérieur du circuit imprimé lorsqu'il est déformé.

Chaque circuit de sécurité comprend une ou plusieurs piste(s) de sécurité interrompue(s) au niveau d'un logement, ou trou, formé dans le circuit imprimé et dans lequel l'élément déformable est inséré. De plus, de manière connue, par exemple dans un terminal de paiement électronique, chaque circuit de sécurité est relié à un module de sécurité apte à détecter une tentative d'intrusion dans le terminal de paiement électronique lorsqu'un ou plusieurs circuit de sécurité est ouvert.

Lorsque l'élément déformable est déformé, par exemple sous l'effet d'une pression suffisante, sa surface conductrice entre en contact avec la ou les piste(s) et ferme le(s) circuit(s) de sécurité correspondant(s) à l'intérieur - autrement dit dans l'épaisseur - du circuit imprimé. Le principe général de la technique proposée repose donc sur le fait que cette déformation est obtenue lorsque le dispositif de saisie de données se trouve dans une situation de fonctionnement normal, et qu'un relâchement de la pression (entrainant un retour à une forme initiale de l'élément déformable) indique une tentative d'intrusion dans le dispositif de saisie de données. Ainsi, l'élément déformable doit être déformé en fonctionnement normal et une détection d'intrusion intervient lorsqu'il reprend sa forme initiale non déformée et ainsi ne ferme plus le ou les circuits de sécurité.

Selon les différents modes de réalisation de l'invention décrits ci-après, la déformation de l'élément déformable de sécurité, peut être obtenue de différentes manières, comme par exemple :
- par la fermeture du dispositif de saisie de données par assemblage de ses capots supérieur et inférieur ;
- par la pose d'un composant en surface du circuit imprimé, au-dessus du logement dans lequel est inséré l'élément déformable ;
- par l'insertion, à l'intérieur de l'élément déformable, d'un moyen de fixation (par exemple une vis d'assemblage) d'un élément/composant du dispositif de saisie de données, sur le circuit imprimé.

Ainsi, lorsque le dispositif de saisie de données est démonté par désassemblage de ses capots, ou demi-coques, l'élément déformable retrouve sa forme initiale de « repos », ce qui ouvre le(s) circuit(s) de sécurité et permet de détecter la tentative d'intrusion.

Un des avantages de la présente technique, par rapport aux techniques actuelles de sécurisation, réside dans le fait que les circuits de sécurité sont difficilement accessibles puisqu'ils sont situés au niveau des couches internes du circuit imprimé et non plus en surface.

Notamment dans le cas où un attaquant tenterait d'injecter un liquide conducteur dans le dispositif de saisie de données dans le but de neutraliser les circuits de sécurité, l'encastrement de l'élément déformable dans le logement permet d'assurer l'étanchéité du dispositif de sécurité et rend donc inopérante l'injection du liquide.

Par la suite, on décrit plus particulièrement des modes de réalisation dans lesquels le dispositif de saisie de données correspond à un terminal de paiement électronique, mais la technique proposée s'applique, selon ses différents modes de réalisation, à tout dispositif de saisie de données répondant aux mêmes problématiques de sécurisation.

La **figure 1** illustre une portion d'un circuit imprimé 10 d'un terminal de paiement électronique présentant classiquement une demi-coque supérieure, ou capot supérieur, et une demi-coque inférieure, ou capot inférieur (non représentées).

Le circuit imprimé 10 comporte un logement 11 débouchant, formé pour être traversant dans l'épaisseur du circuit imprimé 10, par exemple au niveau du clavier, de l'afficheur, du lecteur de carte, ... c'est-à-dire toute zone du terminal de paiement électronique où se trouvent des informations à protéger, ou dans les espaces libres du terminal qui pourraient accueillir des dispositifs espions, ou encore pour déceler les tentatives de démontage du terminal de paiement électronique de son lieu d'installation (cas de montage fixe sur un distributeur ou sur un comptoir).

Dans l'exemple illustré en **figure 1****,** deux circuits de sécurité 12, 13 formés chacun d'une piste de sécurité sont prévus à l'intérieur du circuit imprimé 10. En d'autres termes, les pistes de sécurité sont prévues au niveau des couches internes du circuit imprimé 10, dans son épaisseur, et n'affleurent pas à la surface du circuit imprimé 10 comme c'est le cas dans l'art antérieur.

Les deux circuits de sécurité 12, 13 sont coplanaires, c'est-à-dire qu'ils s'étendent chacun dans un plan correspondant à une couche interne du circuit imprimé, les différentes couches internes étant parallèles entre elles.

Les pistes de sécurité sont réalisées par exemple par des couches de cuivre gravées dans le circuit imprimé 10, par exemple par procédé photochimique comme pour les autres pistes du circuit imprimé, et s'interrompent au niveau du logement 11. Une phase de métallisation (classiquement utilisée pour la réalisation de trous métallisés) peut être utilisée pour améliorer la qualité de la surface de contact à l'intérieur du logement 11.

Plus précisément, dans l'exemple illustré, chaque piste suit la circonférence du logement 11, tout en affleurant à sa paroi verticale de façon à être accessible, et s'interrompt en une zone « isolante » 121, 131, formant ainsi plusieurs portions de pistes non connectées entre elles.

D'autres zones « isolantes » pourraient être prévues dans les pistes sur le pourtour du logement 11.

D'une manière connue, le circuit imprimé 10 comprend respectivement sur ses surfaces inférieure et supérieure un autre type de circuit constitué de pistes conductrices partiellement métallisées, appelé anneau de garde 14. Ces anneaux de garde 14 constituent une sécurité supplémentaire et permettent de détecter si un contact est établi en surface du circuit imprimé 10, par exemple dans le cas où un liquide conducteur serait injecté, entraînant alors une fermeture du circuit permettant de neutraliser le dispositif de sécurité, selon les techniques de l'art antérieur.

La forme cylindrique du logement illustré sur cette **figure 1** permet une efficacité optimale du fonctionnement du dispositif de sécurité, car l'élément déformable de sécurité qui y est inséré, également de forme cylindrique, peut se déformer de façon uniforme et ainsi assurer une fermeture efficace du ou des circuits de sécurité. Toute autre forme, par exemple oblongue, du logement et de l'élément déformable, permettant de répondre à la problématique est bien sûr possible, en fonction également des contraintes d'implantation des composants sur le circuit imprimé, de la position de ce circuit imprimé à l'intérieur du terminal de paiement électronique, etc. Il est à noter que le logement peut être obtenu par perçage ou fraisage, ce qui permet l'obtention d'angles arrondis et ainsi permet à l'élément déformable d'avoir une forme au plus près du profil du logement dans lequel il est inséré.

Les **figures 2 et 3** illustrent un premier mode de réalisation d'un dispositif de sécurité 20 correspondant à un élément déformable de sécurité 20 inséré dans le logement 11 décrit précédemment en relation avec la figure 1.

Selon ce mode de réalisation particulier, cet élément déformable de sécurité 20 présente donc une forme sensiblement cylindrique et comporte une première partie centrale 21 isolante (par exemple en silicone non chargé), correspondant à un support (présentant par exemple un profil en « H » lorsque l'on regarde le circuit imprimé à la verticale) permettant d'assurer le maintien d'une deuxième partie 22 conductrice (par exemple en silicone chargé carbone), recouvrant la première partie 21 sur une partie de sa hauteur et une partie de sa circonférence.

Les deux parties 21, 22, par exemple surmoulées ou assemblées, sont en élastomère (par exemple en silicone) et sont donc déformables.

Dans le cas où les parties 21 et 22 sont surmoulées, lorsque l'élément déformable 20 est soumis à un effort de compression, la partie 22 en élastomère se déforme en « gonflant » à la manière d'un tonneau : sa hauteur diminue tandis que sa circonférence augmente, la partie 21 étant également déformée par entrainement.

Dans le cas où les parties 21 et 22 sont assemblées, lorsque l'élément déformable 20 est soumis à un effort de compression, il se déforme en prenant une forme annelée présentant plusieurs bourrelets de compression : ici aussi sa hauteur diminue tandis que sa circonférence augmente. Cette alternative présente l'avantage d'offrir une plus grande étanchéité aux liquides conducteurs.

Les deux « positions » de l'élément déformable sont donc illustrées respectivement en **figure 2****,** au « repos », et en **figure 3****,** déformé, dans le cas où les parties 21 et 22 sont surmoulées.

Comme indiqué ci-dessus, la première partie 21 est isolante, par exemple en silicone non chargé, tandis que la deuxième partie 22 est conductrice. Cette deuxième partie 22 est par exemple réalisée par moulage d'une matière chargée (par exemple du silicone chargé avec du carbone) et ensuite placée dans le moule dans lequel est réalisé le moulage de la matière non chargée pour la pièce 21, pour effectuer un surmoulage.

Selon une autre variante, la partie chargée 22 est découpée dans de la matière conductrice avant d'être surmoulée.

La partie 22 présente ainsi une surface conductrice permettant, lorsque l'élément déformable 20 est inséré dans le logement et déformé (voire comprimé), de fermer les circuits de sécurité 12 et 13 au niveau des positions 121 et 131 illustrées en **figure 1****.**

Comme indiqué ci-dessus, la **figure 2** représente le dispositif de sécurité 20 dans sa position de « repos», c'est-à-dire avant sa déformation, ici par assemblage des deux coques du terminal de paiement électronique (non illustré).

La surface conductrice périphérique de la partie 22 est en retrait des parois du logement 11 et les circuits de sécurité 12, 13 sont alors ouverts. Par ailleurs, les extrémités du support 21 (correspondant ici aux deux côtés du « H ») sont légèrement surélevées par rapport aux surfaces inférieure et supérieure du circuit imprimé 10.

La **figure 3** représente quant à elle le dispositif de sécurité 20 lorsqu'il est déformé, par exemple lorsque le terminal de paiement électronique est assemblé et en configuration normale « d'utilisation ».

Les surfaces supérieures et inférieures du support 21 sont comprimées sous deux éléments d'appui (non représentés) de part et d'autre du logement 11, dans le même plan que les surfaces inférieure et supérieure du circuit imprimé 10. Les efforts de compression sont transmis à la partie 22, provoquant sa déformation et la mise en contact de sa surface périphérique avec les portions de piste des circuits de sécurité 12, 13 affleurant à l'intérieur du logement 11. Les circuits de sécurité 12, 13 sont alors fermés.

Les éléments d'appui permettant de comprimer le dispositif de sécurité sont par exemple constitués par les demi-coques supérieure et inférieure du terminal de paiement électronique, ou par un ou des composants montés sur le circuit imprimé 10, comme décrit ci-après en relation avec une variante de ce premier mode de réalisation illustrée en **figure 4****.**

La **figure 4** illustre donc, selon une variante de ce premier mode de réalisation, un exemple d'un élément d'appui 30 monté sur le circuit imprimé, au-dessus du logement dans lequel est inséré un dispositif de sécurité tel qu'illustré en **figures 2 et 3****.** C'est donc le composant 30 qui exerce une pression sur l'élément déformable 20 et entraine plus précisément la déformation de la partie 22, fermant ainsi les circuits de sécurité 12 et 13 comme déjà décrit ci-dessus.

Selon une autre variante (non illustrée), le logement 11 peut être non débouchant, ou borgne, par exemple formé dans un dispositif de type « Cache I/O » qui consiste en un dispositif de sécurité complémentaire soudé en surface du circuit imprimé, destiné à protéger un ou plusieurs composants sensibles, comme par exemple les connexions d'un lecteur de carte ou d'un dispositif de sécurité.

Selon un deuxième mode de réalisation, illustré en **figure 5****,** le support 21 du dispositif de sécurité 20 est pourvu d'un passage au travers duquel peut être inséré un moyen de fixation, par exemple une vis 40, destiné à assembler deux parties, ou deux composants, du terminal de paiement électronique de part et d'autre du circuit imprimé 10. C'est l'insertion de ce moyen de fixation dans l'élément déformable de sécurité qui entraîne sa déformation à l'intérieur du logement et ainsi la fermeture du ou des circuits de sécurité concernés, tel que décrit précédemment.

La **figure 6** illustre quant à elle un troisième mode de réalisation du dispositif de sécurité encastré dans le logement 11, dans lequel le dispositif de sécurité 50 comporte deux éléments déformables de sécurité 52A, 52B, présentant chacun une forme sensiblement cylindrique.

Ces éléments déformables de sécurité 52A, 52B sont disposés l'un sur l'autre selon un axe longitudinal du logement 11, c'est-à-dire selon un axe traversant le circuit imprimé 10 de bas en haut. Chaque élément déformable de sécurité 52A, 52B présente une hauteur sensiblement égale à la moitié de la hauteur de l'élément déformable de sécurité 20 décrit dans les premier et deuxième modes de réalisation, mais il pourrait en être autrement (deux éléments déformables de taille différente).

Ces éléments déformables de sécurité 52A, 52B comprennent également une surface périphérique conductrice similaire à celle des premier et deuxième modes de réalisation.

Deux « support » d'extrémité 51A, 51B, présentant une forme générale cylindrique pourvue d'une collerette 511A, 511B sont symétriquement disposés de part et d'autre des éléments 52A, 52B, selon ledit axe longitudinal du logement 11. Ces collerettes 511A, 511B ont un diamètre supérieur au diamètre du logement 11, et permettent, une fois positionnées, de recouvrir celui-ci de façon à améliorer l'étanchéité du dispositif et sa sécurité face aux attaques.

Dans le cas d'un logement 11 borgne, seul un élément « support » à collerette est utilisé.

Les éléments déformables de sécurité 52A, 52B et les éléments « support » d'extrémité 51A, 51B sont déformables, et plus précisément compressibles.

Dans ce mode de réalisation à nouveau, les éléments 52A, 52B se déforment sous l'effet d'un effort de compression en « gonflant » : leur hauteur diminue tandis que leur circonférence augmente.

Ainsi, la surface périphérique de chacun de ces éléments 52A, 52B entre en contact avec les portions de piste des circuits de sécurité 12, 13 affleurant à la périphérie interne du logement 11, ce qui ferme les circuits de sécurité 12, 13.

Selon un premier aspect, les éléments 52A, 52B sont en contact l'un avec l'autre via une surface conductrice lorsque l'élément de sécurité est comprimé. Les collerettes 511A, 511B permettent de maintenir les surfaces frontales conductrices des deux éléments 52A, 52B disjointes tant que l'élément de sécurité n'est pas sous pression. Ainsi, lors de la compression, les deux circuits de sécurité 12, 13 sont fermés de manière conjointe par les deux éléments 52A, 52B puisque le courant circule entre les surfaces périphériques conductrices de chaque élément 52A, 52B.

Selon un second aspect, les éléments 52A, 52B sont en contact l'un avec l'autre via une surface isolante. Dans ce cas, les circuits de sécurité 12, 13 sont indépendants puisque le courant ne circule pas entre les surfaces périphériques conductrices de chaque élément 52A, 52B. L'indépendance des deux circuits 12, 13 rend plus difficile la neutralisation de l'un ou de l'autre. Les deux circuits 12, 13 superposés se protègent donc mutuellement. Il est possible de surveiller conjointement l'ouverture des circuits 12, 13, leur mise à la masse et leur mise en court-circuit, ce qui rend les attaques plus compliquées à mettre en œuvre.

Selon un autre aspect, non illustré, le dispositif de sécurité 20, 50 peut être recouvert d'un treillis souple, par exemple un circuit imprimé flexible recouvert d'une pluralité de pistes conductrices imbriquées, adhésivé sur le dispositif de sécurité avant que les demi-coques du terminal de paiement électronique ne soient assemblées. En effet, un tel treillis souple est apte à se déformer sans perdre en efficacité et peut donc être positionné sur le circuit imprimé lorsque le ou les éléments déformables de sécurité sont en position « au repos » et épouse ensuite la surface du circuit imprimé une fois le ou les éléments déformables de sécurité en position « comprimés » dans le logement. Ce treillis a donc pour objet de renforcer la protection de l'accès au dispositif de sécurité.

En revanche, le treillis souple, seul, ne suffit pas à atteindre les efforts nécessaires à la compression du dispositif de sécurité 20, 50. Cependant, à l'extérieur du dispositif de sécurité et face à ce dispositif de sécurité, il peut être mis en place un appui sur un des capots du terminal de paiement électronique. Ainsi, si un fraudeur tente de maintenir la compression en collant cet appui, le collage se fera sur le treillis souple et ne permettra pas un maintien suffisant de l'appui pour comprimer le dispositif de sécurité 20, 50 et assurer la fermeture des circuits de sécurité 12, 13.

Cette configuration rend ainsi les attaques encore plus compliquées à mettre en œuvre.

Cette nouvelle approche de la sécurisation d'un terminal de paiement électronique présente plusieurs avantages par rapport aux techniques de l'art antérieur.

L'un des avantages réside dans le positionnement des circuits de sécurité 12, 13 au niveau des couches internes du circuit imprimé 10, qui rend ces derniers moins accessibles et donc plus difficiles à neutraliser.

Un autre avantage réside dans la configuration particulière d'un logement débouchant sur les deux surfaces du circuit imprimé, permettant de détecter une tentative d'intrusion à partir de l'un ou l'autre des faces du circuit imprimé. Par exemple, si un attaquant tente d'ouvrir le terminal de paiement, en retirant par exemple la demi-coque supérieure ou la demi-coque inférieure, le dispositif de sécurité cesse d'être comprimé et retrouve sa forme initiale, ouvrant ainsi l'un ou l'autre des circuits de sécurité 12, 13. Ainsi, le dispositif de sécurité cesse d'être comprimé quelle que soit la demi-coque retirée, contrairement à l'art antérieur qui permet de détecter uniquement le retrait de la demi-coque du côté où est installée une « fausse touche » par exemple.

Grâce à la technique proposée, il n'est alors plus nécessaire de multiplier le nombre de dispositifs de sécurité, par exemple un de chaque côté du circuit imprimé, pour assurer de façon fiable la sécurité du terminal de paiement électronique.

De plus, si un attaquant tente d'injecter un liquide conducteur à la surface du circuit imprimé 10 dans le but de neutraliser des contacts électriques, et donc le dispositif de sécurité, avant démontage du terminal, le (ou les)élément(s) déformable(s) de sécurité 20, 52A, 52B se comporte(nt) comme un bouchon isolant lorsqu'il(s) est ou sont comprimé(s) et « gonflé(s) » à l'intérieur du logement 11, empêchant ainsi le liquide de pénétrer dans le logement 11 et d'entrer en contact avec les pistes des circuits de sécurité 12, 13. Par conséquent, si l'attaquant démonte ensuite le terminal, les circuits de sécurité 12, 13 s'ouvrent lorsque l'élément déformable reprend sa forme initiale suite au relâchement de la pression qui lui est appliquée, et la tentative d'intrusion peut être détectée.

Par ailleurs, alors que dans les solutions de l'art antérieur, il fallait assurer un effort minimum pour établir le contact de la « fausse touche » avec la carte de circuit imprimé, la solution de l'invention nécessite des efforts moindres, ou dans tous les cas inférieurs aux efforts minimum requis dans l'art antérieur, pour que l'élément de sécurité se déforme et entre en contact avec les pistes conductrices 12, 13. Ceci est notamment dû au fait que l'élastomère dans lequel est réalisé l'élément de sécurité se déforme plus facilement, du fait de sa souplesse, que les matériaux des « fausses touches » de l'art antérieur.

Ainsi, la compression de l'élément 22 en élastomère ne nécessite le plein effort que lors de la fermeture du terminal de paiement électronique, lors de l'assemblage des deux coques du terminal.

Par exemple, selon l'invention, un effort de compression inférieur à 200gF est suffisant pour déformer l'élément déformable selon une déformation d'environ 0,9 mm, alors qu'un effort d'environ 300gF était par exemple nécessaire dans l'art antérieur, pour activer le dôme métallique nécessitant une déformation entre 0.9 et 1.4 mm selon la dureté de l'élastomère.

Dans le cas où l'élément 22 est placé sous un composant, l'effort généré par le montage du composant reste limité à la déformation de l'élastomère et non à sa compression, mais permet de le déformer suffisamment pour fermer les circuits de sécurité 12, 13.

L'effort nécessaire pour maintenir le contact électrique par déformation de l'élément déformable de sécurité est donc moins important que dans les solutions de l'art antérieur. La solution est ainsi plus fiable à long terme car l'élément déformable de sécurité est soumis à des efforts moindres, n'engendrant pas forcément sa compression totale, et sa capacité de déformation est donc moins susceptible de varier dans le temps.

Bien évidemment, la technique proposée n'est pas limitée aux modes de réalisation décrits précédemment et fournis uniquement à titre d'exemple. Elle englobe diverses modifications, formes alternatives et autres variantes que pourra envisager l'homme du métier dans le cadre de la problématique posée et notamment toutes combinaisons des différents modes de fonctionnement décrits précédemment, pouvant être pris séparément ou en association.

## Revendications

1. Dispositif de sécurité d'un terminal de paiement électronique comprenant au moins un circuit imprimé (10), ledit dispositif de sécurité comprend au moins un élément déformable de sécurité destiné à être inséré dans un logement (11) dudit circuit imprimé (10),
ledit circuit imprimé (10) comprenant au moins un circuit de sécurité (12, 13) comprenant au moins une piste conductrice interne audit circuit imprimé (10), ne débouchant pas à sa surface et interrompue au niveau dudit logement (11), et ledit au moins un élément déformable présente au moins une surface conductrice destinée à fermer ladite au moins une piste conductrice interne lorsque ledit élément déformable est déformé dans ledit logement (11).

2. Dispositif de sécurité selon la revendication 1, **caractérisé en ce que** ledit au moins un élément déformable de sécurité est conçu pour se déformer dans ledit logement (11) par un moyen appartenant au groupe comprenant :
- déformation par montage d'un composant sur ledit circuit imprimé (10) au-dessus dudit élément déformable de sécurité inséré dans ledit logement (11) ;
- déformation par insertion d'un moyen de fixation à l'intérieur dudit élément déformable de sécurité inséré dans ledit logement (11);
- compression par assemblage dudit terminal de paiement électronique.

3. Dispositif de sécurité selon la revendication 1, **caractérisé en ce qu'**au moins une partie dudit au moins un élément déformable est réalisée en élastomère.

4. Dispositif de sécurité selon les revendications 1 à 3, **caractérisé en ce que** ledit logement (11) et ledit au moins un élément déformable de sécurité présentent une forme sensiblement cylindrique.

5. Dispositif de sécurité selon l'une quelconque des revendications 1 à 4, **caractérisé en ce que** ledit logement (11) est un trou débouchant.

6. Dispositif de sécurité selon l'une quelconque des revendications 1 à 5, **caractérisé en ce qu'**il comprend deux éléments déformables (52A, 52B) présentant chacun au moins une surface conductrice, destinés à être insérés l'un sur l'autre dans ledit logement (11).

7. Dispositif de sécurité selon la revendication 6, **caractérisé en ce que** lesdits deux éléments déformables (52A, 52B) sont en contact par une surface non conductrice.

8. Dispositif de sécurité selon l'une quelconque des revendications 1 à 7, **caractérisé en ce que** ledit circuit imprimé (10) comprend deux circuits de sécurité coplanaires (12, 13) comprenant chacun au moins une piste de sécurité conductrice interne audit circuit imprimé (10) et interrompue au niveau dudit logement (11) et **en ce que** ledit au moins un élément déformable (20, 52A, 52B) présente au moins une surface conductrice destinée à fermer ladite au moins une piste conductrice de chacun desdits deux circuits de sécurité (12, 13) coplanaires lorsque ledit élément déformable (20, 52A, 52B) est déformé.

9. Dispositif de sécurité selon l'une quelconque des revendications 1 à 8, **caractérisé en ce que** ledit au moins un élément déformable (20, 52A, 52B) de sécurité présente une collerette (511A, 511B) à une de ses extrémités, ladite collerette (511A, 511B) étant destinée à recouvrir ledit logement (11) en surface dudit circuit imprimé (10) lorsque ledit au moins un élément déformable (20, 52A, 52B) de sécurité est inséré dans ledit logement (11).

10. Dispositif de sécurité selon la revendication 6 et la revendication 9, **caractérisé en ce que** lesdits deux éléments déformables (52A, 52B) sont en contact par une surface d'échange conductrice lorsque lesdits éléments déformables (52A, 52B) sont déformés dans le logement (11).

11. Dispositif de sécurité selon l'une quelconque des revendications 1 à 10, **caractérisé en ce qu'**il est recouvert d'un treillis souple.

12. Terminal de paiement électronique comprenant au moins un dispositif de sécurité selon l'une quelconque des revendications 1 à 11.

## Patentansprüche

1. Sicherheitsvorrichtung eines elektronischen Zahlungsterminals, umfassend mindestens eine gedruckte Schaltung (10), wobei die Sicherheitsvorrichtung mindestens ein verformbares Sicherheitselement aufweist, das dazu bestimmt ist, in eine Aufnahme (11) der gedruckten Schaltung (10) eingefügt zu werden,
wobei die gedruckte Schaltung (10) mindestens einen Sicherheitskreis (12, 13) aufweist, der mindestens eine Leiterbahn im Inneren der gedruckten Schaltung (10) aufweist, die nicht an ihrer Oberfläche austritt und an der Aufnahme (11) unterbrochen ist,
wobei das mindestens eine verformbare Element mindestens eine leitfähige Oberfläche aufweist, die dazu bestimmt ist, die mindestens eine innere Leiterbahn zu schließen, wenn das verformbare Element in der Aufnahme (11) verformt ist.

2. Sicherheitsvorrichtung nach Anspruch 1, **dadurch gekennzeichnet, dass** das mindestens eine verformbare Sicherheitselement ausgebildet ist, um sich in der Aufnahme (11) durch ein Mittel zu verformen, das zu der Gruppe gehört, umfassend:
- Verformen durch Anbringen eines Bauteiles auf der gedruckten Schaltung (10) über dem verformbaren Sicherheitselement, das in die Aufnahme (11) eingefügt ist;
- Verformen durch Einfügen eines Befestigungsmittels ins Innere des verformbaren Sicherheitselements, das in die Aufnahme (11) eingefügt ist;
- Komprimieren durch Anbringen des elektronischen Zahlungsterminals.

3. Sicherheitsvorrichtung nach Anspruch 1, **dadurch gekennzeichnet, dass** mindestens ein Teil des mindestens einen verformbaren Sicherheitselements aus Elastomer hergestellt ist.

4. Sicherheitsvorrichtung nach Anspruch 1 bis 3, **dadurch gekennzeichnet, dass** die Aufnahme (11) und das mindestens eine verformbare Sicherheitselement eine im Wesentlichen zylindrische Form aufweisen.

5. Sicherheitsvorrichtung nach einem der Ansprüche 1 bis 4, **dadurch gekennzeichnet, dass** die Aufnahme (11) ein Durchgangsloch ist.

6. Sicherheitsvorrichtung nach einem der Ansprüche 1 bis 5, **dadurch gekennzeichnet, dass** sie zwei verformbare Sicherheitselemente (52A, 52B) aufweist, die jeweils mindestens eine leitfähige Oberfläche aufweisen, die dazu bestimmt sind, übereinander in die Aufnahme (11) eingefügt zu werden.

7. Sicherheitsvorrichtung nach Anspruch 6, **dadurch gekennzeichnet, dass** die zwei verformbaren Sicherheitselemente (52A, 52B) durch eine nicht leitfähige Oberfläche in Kontakt stehen.

8. Sicherheitsvorrichtung nach einem der Ansprüche 1 bis 7, **dadurch gekennzeichnet, dass** die gedruckte Schaltung (10) zwei koplanare Sicherheitskreise (12, 13) aufweist, die jeweils mindestens eine Sicherheitsleiterbahn, die sich im Inneren der gedruckten Schaltung (10) befindet und an der Aufnahme (11) unterbrochen ist, aufweisen, und dadurch, dass das mindestens eine verformbare Element (20, 52A, 52B) mindestens eine leitfähige Oberfläche aufweist, die dazu bestimmt ist, die mindestens eine Leiterbahn von jedem der zwei koplanaren Sicherheitskreise (12, 13) zu schließen, wenn das verformbare Element (20, 52A, 52B) verformt wird.

9. Sicherheitsvorrichtung nach einem der Ansprüche 1 bis 8, **dadurch gekennzeichnet, dass** das mindestens eine verformbare Sicherheitselement (20, 52A, 52B) an einem seiner Enden einen Kragen (511A, 511B) aufweist, wobei der Kragen (511A, 511B) dazu bestimmt ist, die Aufnahme (11) an der Oberfläche der gedruckten Schaltung (10) zu bedecken, wenn das mindestens eine verformbare Sicherheitselement (20, 52A, 52B) in die Aufnahme (11) eingefügt ist.

10. Sicherheitsvorrichtung nach Anspruch 6 und Anspruch 9, **dadurch gekennzeichnet, dass** die zwei verformbaren Elemente (52A, 52B) durch eine leitfähige Austauschfläche in Kontakt stehen, wenn die verformbaren Elemente (52A, 52B) in der Aufnahme (11) verformt sind.

11. Sicherheitsvorrichtung nach einem der Ansprüche 1 bis 10, **dadurch gekennzeichnet, dass** sie durch ein biegsames Geflecht bedeckt ist.

12. Elektronisches Zahlungsterminal, umfassend mindestens eine Sicherheitsvorrichtung nach einem der Ansprüche 1 bis 11.

## Claims

1. Security device for an electronic payment terminal comprising at least one printed circuit (10), said security device comprises at least on deformable security element configured to be inserted in a housing (11) of said printed circuit (10),
said printed circuit (10) comprising at least one security circuit (12, 13) comprising at least one conducting track internal to said printed circuit (10), not opening up on the surface and interrupted at said housing (11),
and said at least one deformable element has at least one conducting surface configured to close said at least one internal conducting track when said deformable element is deformed in said housing (11).

2. Security device according to claim 1, **characterised in that** said at least one deformable security element is designed to deform in said housing (11) through a means forming part of the group composed of:
- deformation by assembly of a component on said printed circuit (10) above said deformable security element inserted in said housing (11);
- deformation by insertion of an attachment means inside said deformable security element inserted in said housing (11);
- compression by assembly of said electronic payment terminal.

3. Security device according to claim 1, **characterised in that** at least part of said at least one deformable element is made of elastomer.

4. Security device according to claims 1 to 3, **characterised in that** said housing (11) and said at least one deformable security element are approximately cylindrical in shape.

5. Security device according to any one of claims 1 to 4, **characterised in that** said housing (11) is a through hole.

6. Security device according to any one of claims 1 to 5, **characterised in that** it comprises two deformable elements (52A, 52B) each of which has at least one conducting surface, said two deformable elements (52A, 52B) being configured to be inserted one above the other in said housing (11).

7. Security device according to claim 6, **characterised in that** said two deformable elements (52A, 52B) are in contact through a non-conducting surface.

8. Security device according to any one of claims 1 to 7, **characterised in that** said printed circuit (10) comprises two coplanar security circuits (12, 13) each comprising at least one conducting security track internal to said printed circuit (10) and interrupted at said housing (11) and **in that** said at least one deformable element (20, 52A, 52B) has at least one conducting surface configured to close said at least one conducting track of each of said two coplanar security circuits (12, 13) when said deformable element (20, 52A, 52B) is deformed.

9. Security device according to any one of claims 1 to 8, **characterised in that** said at least one deformable element (20, 52A, 52B) has a flange (511A, 511B) at one of its ends, said flange (511A, 511B) being configured to cover said housing (11) on the surface of said printed circuit (10) when said at least one deformable security element (20, 52A, 52B) is inserted in said housing (11).

10. Security device according to claim 6 and claim 9, **characterised in that** said two deformable elements (52A, 52B) are in contact through a conducting exchange surface when said two deformable elements (52A, 52B) are deformed in the housing (11).

11. Security device according to any one of claims 1 to 10, **characterised in that** it is covered by a flexible mesh.

12. Electronic payment terminal comprising at least one security device according to any one of claims 1 to 11.
